# EUROPÄISCHE PATENTSCHRIFT

(11) **EP 3 638 977 B1**
(45) Veröffentlichungstag und Bekanntmachung des Hinweises auf die Patenterteilung: **04.05.2022**
(21) Anmeldenummer: 18762451.5
(22) Anmeldetag: 03.08.2018
(51) Int. Cl.: G01B 11/00, G06T 7/73

(54) **VORRICHTUNG UND VERFAHREN ZUM WINKELBASIERTEN LOKALISIEREN EINER POSITION AUF EINER OBERFLÄCHE EINES OBJEKTS**
APPARATUS AND METHOD FOR ANGLE-BASED LOCALIZATION OF A POSITION ON A SURFACE OF AN OBJECT
DISPOSITIF ET PROCÉDÉ DE LOCALISATION ANGULAIRE D'UNE POSITION SUR UNE SURFACE D'UN OBJET

(30) Priorität: 04.08.2017 DE 102017213555
(43) Veröffentlichungstag der Anmeldung: 22.04.2020
(73) Patentinhaber: Siemens Energy Global GmbH & Co. KG, 81739 München (DE)
(72) Erfinder: MASHKIN, Andrey, 50672 Köln (DE); RÖHR, Florian, 45481 Mülheim a.d. Ruhr (DE); SCHMIDT, Guido, 42799 Leichlingen (DE)
(86) Internationale Anmeldenummer: PCT/EP2018/071188
(87) Internationale Veröffentlichungsnummer: WO 2019/025614

(56) Entgegenhaltungen:
- WO-A1-2015/114309
- WO-A1-2015/181827
- US-A1- 2010 102 980
- US-A1- 2014 215 841
- US-A1- 2015 016 666

## Beschreibung

Die vorliegende Erfindung betrifft eine Vorrichtung zum winkelbasierten Lokalisieren einer Position auf einer Oberfläche eines Objekts, insbesondere auf Komponenten von Turbinen oder Generatoren. Zudem betrifft die Erfindung ein für die Vorrichtung geeignetes Verfahren zum winkelbasierten Lokalisieren einer Position auf einer Oberfläche eines Objekts.

Im Bereich des Maschinenbaus und der Kraftwerkstechnik haben viele große Anlagen und Maschinen eine komplexe Geometrie, beispielsweise Gas- oder Dampfturbinen oder Generatoren. Inspektionen, bei denen z.B. Fehler bzw. Beschädigungen oder zu überwachende Fundstellen von Auffälligkeiten lokalisiert werden oder einer spezifischen Komponente der Anlage zugeordnet werden sollen, stellen für den Inspekteur ein Problem dar, wenn nur einzelne Abschnitte der Oberfläche einer Komponente der Anlage für den Inspekteur zugänglich sind oder auffällige Stellen zwar erkennbar sind, aber aufgrund der komplexen Form der möglicherweise nahe beieinander angeordneten Komponenten nicht visuell ersichtlich ist, zu welcher Komponente der Anlage die Fundstelle gehört.

Beispielsweise sind bei einem Stator eines Turbogenerators die einzelnen Leiter der Ständerwicklung um den Läufer in den Nuten eines Magnetkerns angeordnet. Diese Leiter sind bei deren Austritt aus dem Magnetkern zwar ggf. sichtbar, wenn der Rotor nicht installiert ist. Aufgrund der Anzahl der Leiter ist ein Abzählen, beispielsweise vom obersten oder untersten Punkt des Stators, um die korrekte Nummer des Leiters zu bestimmen, aber potentiell fehlerbehaftet. Zudem haben diese in der Regel zumindest im Endbereich eine gebogene Form, so genannte Evolvente, so dass die Zuordnung einer Fundstelle entfernt vom Anfangsbereich der Evolvente und dem Magnetkern durch Nachverfolgen des Verlaufs der Evolvente zum korrekten Anfangsbereich schwierig ist. Ist der Rotor installiert, ist nur eine Inspektion von außen möglich, wobei aufgrund von Abdeckungen, Befestigungselementen usw. die Sicht auf viele Bereiche nur sehr eingeschränkt möglich ist.

Auch bei Turbinen, beispielsweise Gasturbinen oder Dampfturbinen, stellt deren komplexe Geometrie beim Lokalisieren von Fundstellen bzw. deren exaktem Zuordnen zu Komponenten der Turbinen eine Schwierigkeit dar. Beispielsweise ist der Querschnitt einer Turbinenschaufel, je nach betrachtetem Abschnitt, konvex, konkav oder auch rund. Um in der Vielzahl der Turbinenschaufeln die betroffene Schaufel exakt zu identifizieren, muss daher die Bauteilnummer festgestellt werden, sofern diese zugänglich ist. Alternativ kann versucht werden, durch Messungen von Entfernungen zu bekannten Punkten die Komponente mit der Fundstelle exakt zu lokalisieren.

Aufwendige Verfahren für spezielle Anwendungen bestimmen Bauteile während des Betriebs. So ist in der DE 10 2009 019 920 A1 vorgesehen, die axiale Position einer Schaufel eines Rotors anhand ihrer aktuellen Schwingungscharakteristik im Vergleich zu aufgezeichneten Schwingungsauslenkungen zu ermitteln. Bei einer visuellen Inspektion detektierte Schaufeln können ohne potentiell schädigende erneute Inbetriebnahme des Rotors der Turbine aber so nicht zugeordnet werden.

Das Lokalisieren einer Fundstelle durch Messen von Entfernungen kann dagegen Teil einer visuellen Inspektion sein, setzt jedoch sehr genaues Arbeiten voraus und kann leicht zu Fehl-Lokalisierungen oder Fehlzuordnungen führen, wodurch ggf. falsche Komponenten ausgetauscht werden, was zum einen zu hohen Kosten, zum anderen auch zu einer Gefährdung der Betriebssicherheit führen kann, wenn eine fehlerhafte Komponente in der Anlage verbleibt.

Zudem dokumentieren Inspekteure gefundene auffällige Stellen häufig mit Fotos, z.B. um diese später in einem Bericht zu verwenden. Aufgrund der Möglichkeit der fehlerhaften Zuordnung der Fundstelle zur betroffenen Komponente werden so möglicherweise auch die Bilder falsch zugeordnet bzw. werden mit anderen Bildern, die beispielsweise früher aufgenommen wurden oder die Fundstelle aus einer anderen Perspektive zeigen sollen, verglichen, die nun aber nicht dasselbe betroffene Bauteil zeigen, was ebenfalls zu Fehlern und ineffizienter Arbeit bzw. unzureichenden Inspektionsergebnissen führen kann.

In der US 2014/0215841 A1 wird ein Messverfahren und eine an einer Positioniervorrichtung angebrachte eine geeignete Messvorrichtung gezeigt, womit eine Position eines Merkmals, beispielsweise einer Kante einer Turbinenschaufel einer Oberfläche eines Objekts detektiert werden kann. Dabei wird ein Messfühler in Kontakt mit der Oberfläche gebracht und bewegt, wobei jeweils die Orientierung des Messfühlers erfasst wird. Mehrdeutigkeiten der aufgenommenen Daten aufgrund des Verlaufs der Oberfläche werden unter Berücksichtigung von Modelldaten des Objekts aufgelöst.

In der WO 2015/181827 A1 wird ein Verfahren und System zur Georegistrierung von Bildern gezeigt, bei dem mit einem Bildsensor ein Bild einer Szene aufgenommen wird und die Orientierung des Bildsensors bei der Aufnahme festgestellt wird. Anhand der Orientierung des Bildsensors wird eine zugehörige 2D-Ansicht aus einem 3D-Modell der Szene extrahiert. Diese kann dann mit dem aufgenommenen Bild verglichen werden und anhand der Abweichungen die Positionszuordnung optimiert werden.

In der US 2010/0102980 A1 wird ein System und Verfahren zum Bestimmen einer Position eines tragbaren Messgeräts relativ zu einem bekannten Objekt gezeigt. Bei dem tragbaren Messgerät kann es sich beispielsweise um ein Smartphone handeln, mit dem zusätzlich ein Laser-Pointer zum Anvisieren einer Position auf dem Objekt starr verbunden ist. Dabei wird zunächst das Gerät kalibriert, um die Position des Geräts relativ zu einer Position auf dem Objekt zu bestimmen. Folgenden Änderungen der Orientierung des Messgeräts lassen sich dann entsprechende Positionen auf dem Objekt zuordnen.

In der WO 2015/114309 A1 wird eine Positionierungsvorrichtung für einen optischen Triangulationssensor beschrieben, mit der Abstände bei Turbinenschaufeln vermessen werden. Dabei wird eine Befestigungsvorrichtung, die auch ein Gehäuse umfasst, das einen Orientierungssensor zum Erfassen der Ausrichtung enthält, an einer Turbinenschaufel angebracht. Die Befestigungsvorrichtung kann zudem auch einen Transmitter zur drahtlosen Kommunikation mit einem entfernten Computer aufweisen.

In der US2015/0016666 A1 wird ein Verfahren und eine Vorrichtung zum Ermitteln von Positionen von Objekten beschrieben, die auf mit einem Kamerasensor aufgenommen Bildern gezeigt sind. Dabei ist insbesondere auch vorgesehen, dass die Bilder erzeugt und zusammen mit Orientierungsparametern der Kamera in einer Datenbank gespeichert werden können.

Es ist eine Aufgabe der vorliegenden Erfindung, eine verbesserte Möglichkeit bereitzustellen, eine Position einer Fundstelle auf der Oberfläche einer Maschine, Anlage oder eines anderen Objekts mit einer komplexen Geometrie zuverlässig zu lokalisieren und dem zugehörigen Bauteil zuzuordnen.

Diese Aufgabe wird erfindungsgemäß mit einer Vorrichtung zum winkelbasierten Lokalisieren einer Position auf einer Oberfläche eines Objekts gemäß Anspruch 1 sowie einem Verfahren zum winkelbasierten Lokalisieren einer Position auf einer Oberfläche eines Objekts gemäß Anspruch 13 und einem Computerprogrammprodukt gemäß Anspruch 16 gelöst. Vorteilhafte Weiterbildungen der Erfindung sind in den Unteransprüchen angegeben.

Gemäß einem ersten Aspekt der Erfindung umfasst eine Vorrichtung zum winkelbasierten Lokalisieren einer Position auf einer Oberfläche eines Objekts einen Orientierungssensor, der dazu eingerichtet ist, zumindest zu einem Messzeitpunkt in einem bekannten Verhältnis relativ zu einer zu identifizierenden Position auf einer Oberfläche eines Objekts angeordnet zu werden und zumindest zu dem Messzeitpunkt Winkelinformationen zu seiner aktuellen Orientierung zu erfassen, sowie eine programmierbare Einrichtung zumindest mit einem Prozessor und einem Speicher, wobei der Speicher Instruktionen und zumindest eine Zuordnungsvorschrift für das Objekt mit der Oberfläche aufweist, mit der Winkelinformationen zugehörige Positionen auf der Oberfläche des Objekts zugeordnet werden, und wobei die Instruktionen, wenn sie von dem Prozessor ausgeführt werden, bewirken, dass die programmierbare Einrichtung die zu dem Messzeitpunkt von dem Orientierungssensor erfassten Winkelinformationen empfängt und die zu identifizierende Position durch Zuordnen zu den erfassten Winkelinformationen anhand der Zuordnungsvorschrift ermittelt.

Ein Objekt mit einer Oberfläche kann beispielsweise ein Generator, eine Gasturbine, eine Dampfturbine oder ein anderes Objekt mit einer komplexen Oberfläche sein und kann sich aus mehreren Komponenten bzw. Bauteilen zusammensetzen. Die zu identifizierende Position auf der Oberfläche kann beispielsweise eine bei einer Inspektion ermittelte Fundstelle eines Fehlers oder eine zu überwachende Stelle bezeichnen, kann aber auch eine andere Position auf dem Objekt bezeichnen, die beispielsweise mit einer derartigen Fundstelle in Zusammenhang steht, beispielsweise eine für den Orientierungssensor zugängliche Position auf der Oberfläche, die (möglicherweise) zu derselben Komponente des Objekts gehört wie die eigentliche Fundstelle.

Ein Orientierungssensor ermittelt die als Winkelinformationen darstellbare Orientierung bzw. Ausrichtung des Sensors im Raum, wobei die Winkelinformationen die Größe der Auslenkungswinkel des Sensors im dreidimensionalen Raum aus einer Ruhelage angeben. Eine Darstellung in kartesischen Koordinaten ist ebenfalls möglich. Ein Orientierungssensor oder Lagesensor kann beispielsweise ein Gyrosensor sein, wie er unter anderem häufig in Mobiltelefonen bzw. Smartphones zum Einsatz kommt.

Der Orientierungssensor ist dazu eingerichtet, zumindest zu dem Messzeitpunkt, d.h. zu dem Zeitpunkt, an dem die Winkelinformationen vom Sensor erfasst werden sollen, in einem bekannten Verhältnis relativ zu der zu identifizierenden Position auf der Oberfläche des Objekts angeordnet zu werden. Auf diese Weise ist sichergestellt, dass die für die Zuordnung der Winkelinformationen zu den Positionen auf der Oberfläche verwendete Zuordnungsvorschrift auf die aktuell zu erfassenden Winkelinformationen anwendbar ist. Um den Orientierungssensor dazu einzurichten, kann vorgesehen sein, dass dieser als mobiles Gerät bzw. als Bestandteil eines mobilen Geräts ausgestaltet ist, um mit dem Sensor verschiedene Positionen auf der Oberfläche des Objekts und auch auf anderen Objekten untersuchen zu können. Weiterhin kann vorgesehen sein, die Form des Sensors oder dessen Gehäuse so zu gestalten, dass er in einer definierten relativen Lage zur Oberfläche angebracht, beispielsweise auf die Oberfläche des Objekts an der zu identifizierenden Position aufgelegt werden kann. Beispielsweise kann der Orientierungssensor hierfür in einem Gehäuse untergebracht sein, das über eine flache Oberfläche auf der auf das Objekt aufzulegenden Seite verfügt. In einer Ausführungsform kann vorgesehen sein, das bekannte Verhältnis zur Oberfläche mit einem Hilfsmittel herzustellen, durch das die definierte starre Lage des Sensors ermöglicht wird. Hierbei kann vorgesehen sein, das Hilfsmittel spezifisch optimiert für das zu untersuchende Objekt zu wählen, während der Orientierungssensor selbst mit einer Mehrzahl von Hilfsmitteln für verschiedene, ggf. beliebige Objekte verwendbar bleibt. Des Weiteren kann vorgesehen sein, den Orientierungssensor, beispielsweise durch Verwendung von zusätzlichen Abstandssensoren, dazu einzurichten, dass er berührungslos parallel zu der Oberfläche angeordnet werden kann.

Die Zuordnungsvorschrift für das Objekt mit der Oberfläche hängt von dessen geometrischer Komplexität ab und kann insbesondere in Form eines dreidimensionalen Modells des Objekts, aber beispielsweise auch in Form einer Formel oder einer Look-Up-Tabelle gegeben sein, die auf der Kenntnis der Form des Objekts beruht und die den Winkelinformationen bzw. Winkelkoordinaten Positionen auf der Oberfläche des Objekts zuordnet. Da keine absoluten Koordinaten im Raum, sondern die jeweilige Neigung der Oberfläche charakterisierende Winkelkoordinaten bzw. Winkelinformationen zur Identifizierung der Position verwendet werden, kann, je nach geometrischer Form der Oberfläche des Objekts die Positionszuordnung eindeutig, aber ggf. auch mehrdeutig sein, beispielsweise bei der Zuordnung einer Position auf einer ebenen Fläche. Dort könnte mit nur einer Messung die gesamte Fläche zugeordnet werden. In einer Ausführungsform ist es daher vorgesehen, eine Mehrzahl von Messungen mit dem Orientierungssensor vorzunehmen, von denen mindestens eine einer anderen Orientierung entspricht. Beispielsweise im Wesentlichen konzentrisch um eine Achse angeordnete komplexe, aus einer Vielzahl einzelner Komponenten bestehende Objekte wie Turbinen oder Generatoren eignen sich besonders für die Anwendung der beschriebenen Vorrichtung zur Positionsbestimmung.

Um die Zuordnungsvorschrift anwenden zu können, steht die programmierbare Einrichtung in Kommunikation mit dem Orientierungssensor und empfängt die erfassten Winkelinformationen, beispielsweise über eine direkte drahtgebundene oder drahtlose Verbindung zeitgleich oder zeitversetzt, z.B. nach Zwischenspeicherung in einem mit dem Orientierungssensor verbundenen Speicher oder auch, wenn der Orientierungssensor und die programmierbare Einrichtung im selben Gerät realisiert sind, über Schreib- bzw. Lesezugriff auf einen gemeinsamen Speicher. Die von dem Prozessor auszuführenden Instruktionen können in Form von Programmcode vorliegen. Beispielsweise kann der Orientierungssensor der eines Mobiltelefons bzw. Smartphones mit einem Prozessor und Speicher sein und die Instruktionen in Form einer Smartphone-App bereitgestellt sein.

Die Vorrichtung zum winkelbasierten Lokalisieren einer Position auf einer Oberfläche eines Objekts ermöglicht die Positionsbestimmung und Zuordnung der Position zu einer bestimmten Komponente des Objekts auf der Basis der Kenntnis eines Modells des Objekts und einer Ermittlung der Orientierung bzw. Ausrichtung der Oberfläche des Objekts an der zu identifizierenden Position. So werden Kenntnisse der absoluten Position, beispielsweise durch das globale Positionserkennungssystem GPS ermittelbar, sofern sich das Objekt im Freien befindet, vermieden. Die Position kann direkt ermittelt werden, ohne die Gefahr einer Fehlzuordnung und eventuell damit verbundener Folgekosten. Der Inspekteur muss lediglich die Vorrichtung bzw. das Messgerät mit dem Orientierungsbestimmungssensor zur Messung der Orientierung korrekt anlegen. Eine besondere Qualifikation, beispielsweise um zuverlässige Entfernungsmessungen vorzunehmen, um daraus zu ermitteln, welches Bauteil sich an der zu identifizierenden Position befindet, ist somit weniger erforderlich. Ebenso können Verzögerungen vermieden werden, die bei einer Überprüfung von potentiell unsicheren Messergebnissen entstehen. Beispielsweise erfordert eine Überprüfung mit einer anderen Messmethode dann z.B. ein Zerlegen zumindest eines Teils des Objekts (bei einem Generator z.B. das Entfernen des Rotors, um den Stator besser untersuchen zu können).

In einer bevorzugten Ausführungsform ist der Orientierungssensor dazu eingerichtet, zumindest zu dem Messzeitpunkt zumindest mittelbar in körperlichen Kontakt zu der Oberfläche des Objekts gebracht zu werden. So kann der Orientierungssensor auf leicht handhabbare Weise in einem bekannten Verhältnis relativ zu der zu identifizierenden Position auf der Oberfläche des Objekts angeordnet werden und die Winkelinformationen zu seiner aktuellen Orientierung erfasst werden. Die definierte Lage zur Oberfläche des Objekts kann so leicht unmittelbar durch eine geeignete Form der Oberfläche des Orientierungssensors bzw. des Geräts oder Gehäuses, in dem er enthalten ist oder mittelbar durch eine geeignet an die Oberfläche des Objekts angepasst geformtes Hilfs- oder Haltemittel hergestellt werden.

In einer weiteren Ausführungsform ist der Orientierungssensor dazu eingerichtet, distanziell bzw. berührungslos, gegebenenfalls gestützt durch weitere Hilfsmittel, eine vorgegebene örtliche Relation, z.B. Parallelität, zu der Oberfläche des Objekts einzunehmen, um so in einem bekannten Verhältnis relativ zu der zu identifizierenden Position auf der Oberfläche des Objekts angeordnet zu werden. Dies ist insbesondere vorteilhaft, wenn z.B. eine direkte Auflegung durch Hindernisse, Schutzabdeckung oder Oberflächentemperatur nicht möglich ist. Hierzu kann der Orientierungssensor beispielsweise zusammen mit Abstandssensoren in einem Gehäuse untergebracht sein, deren Abstandssignale die korrekte Anordnung des Orientierungssensors im Verhältnis zur Oberfläche berührungslos ermöglichen.

In einer beispielhaften Ausführungsform umfasst die Vorrichtung zum winkelbasierten Lokalisieren einer Position auf einer Oberfläche eines Objekts eine Halteeinrichtung, die zumindest das Anordnen des Orientierungssensors in dem bekannten Verhältnis relativ zu der zu identifizierenden Position auf der Oberfläche des Objekts ermöglicht. Die Halteeinrichtung dient dazu, den Orientierungssensor während der Messung in der erforderlichen bekannten Lage zu halten. Dabei kann es sich um eine Halterung handeln, die den Sensor festhält, oder um einen Abstandshalter, der es ermöglicht, den Sensor so aufzulegen, dass er mit der bekannten Orientierung relativ zur Oberfläche aufliegt, d.h. so dass dadurch der zur Inspektion verwendete Orientierungssensor einen bekannten Winkel zur Oberfläche bekommt.

In einer Ausführungsform der Vorrichtung sind der Orientierungssensor und die programmierbare Einrichtung in einem gemeinsamen Gehäuse untergebracht. So kann die Vorrichtung zum winkelbasierten Lokalisieren einer Position auf einer Oberfläche eines Objekts in einem einzigen Gerät realisiert werden.

In einer bevorzugten Ausführungsform sind der Orientierungssensor und die programmierbare Einrichtung Komponenten eines mobilen elektronischen Geräts, vorzugsweise eines Mobiltelefons. Ein modernes Mobiltelefon, d.h. insbesondere ein Smartphone, weist meist bereits serienmäßig einen Orientierungssensor sowie Prozessor und Speicher auf, so dass es sich zur einfachen Realisierung einer Vorrichtung zum winkelbasierten Lokalisieren einer Position auf einer Oberfläche eines Objekts eignen kann, wenn die Zuordnungsvorschrift, beispielsweise in Form eines 3D-Modells des Objekts in den Speicher geladen wird und der Prozessor zudem ein Programm bzw. eine App ausführt, die die beschriebenen Instruktionen zur Ermittlung der zu identifizierenden Position ausführt. Zudem enthält es meist eine Kamera, so dass auch Fotos von dem Objekt gemacht werden können. Da für die beschriebene Vorrichtung die Telefonfunktion nicht erforderlich ist, kann sie prinzipiell aber auch als ein anderes elektronische Gerät realisiert sein, das die für die beschriebene Vorrichtung erforderlichen Komponenten enthält.

In einer weiteren Ausführungsform umfasst die Halteeinrichtung den Orientierungssensor. Indem der Orientierungssensor bei dieser Ausführungsform in der Halteeinrichtung untergebracht ist, ist er nicht auf die baulichen Grenzen beispielsweise eines Smartphone-Gehäuses begrenzt, sondern kann größer, voluminöser und mit genaueren Hardware-Komponenten realisiert sein, und/oder kann eine bessere Schirmung, mit wirkungsvollerer Kompensation von Einflüssen externer Magnetfelder, die den Orientierungssensor beeinflussen könnten, aufweisen. Auch bei dieser Ausführungsform kann zur Realisierung der Vorrichtung dennoch ein Smartphone mit einer App verwendet werden, nur dass die Funktion des darin integrierten Orientierungssensors zugunsten des Sensors in der Halteeinrichtung nicht verwendet wird. In einer Ausführungsform werden auch die Winkelinformationen beider Sensoren erfasst, z.B. um die Redundanz zu Kontroll- oder Kalibrierungszwecken zu nutzen.

In einer bevorzugten Ausführungsform verfügt die Halteeinrichtung über eine Kommunikationsschnittstelle, über die die erfassten Winkelinformationen an die programmierbare Einrichtung übertragbar sind. Dies bietet den Vorteil, dass die programmierbare Vorrichtung die Ermittlung der zu identifizierenden Position durchführen kann, auch wenn die Vorrichtung auf mindestens zwei separate Komponenten verteilt ist.

In einer beispielhaften Ausführungsform ist die Kommunikationsschnittstelle eine Schnittstelle für drahtlose Kommunikation. Beispielsweise ist so eine Kommunikation mit einer der drahtlosen Schnittstellen eines Smartphones realisierbar, z.B. einer WLAN-Schnittstelle, Bluetooth oder einer anderen Near Field Communication-Schnittstelle (NFC).

Erfindungsgemäß umfasst die Vorrichtung zum winkelbasierten Lokalisieren einer Position auf einer Oberfläche eines Objekts außerdem einen Kamerasensor und die Instruktionen, wenn sie von dem Prozessor ausgeführt werden, bewirken außerdem, dass die programmierbare Einrichtung dazu eingerichtet ist, zumindest ein von dem Kamerasensor aufgenommenes digitales Bild mit den zu dem Messzeitpunkt erfassten Winkelinformationen assoziiert zu speichern. Je nach Ausführungsform umfasst das Speichern des digitalen Bildes assoziiert mit den Winkelinformationen den Fall, dass die Winkelinformationen abgespeichert werden und den Fall, dass die aus den Winkelinformationen ermittelte Position auf der Oberfläche abgespeichert wird. Dabei zeigt das erzeugte digitale Bild vorzugsweise ein in Beziehung zu einem zu der zu identifizierenden Position stehendes Segment der Oberfläche des Objekts. Das kann die Umgebung der zu identifizierenden Position sein oder z.B. ein anderer Abschnitt eines Bauteils, auf dem die Position liegt, insbesondere die Fundstelle der Auffälligkeit bei der Inspektion, wenn diese selbst für den Orientierungssensor schlecht zu erreichen ist. Es kann also dieselbe Messposition zeigen, die mit dem Orientierungssensor vermessen wird, oder eine andere, zu der dann z.B. über das dreidimensionale Modell des Objekts eine Verbindung zur Messposition des Orientierungssensors herstellbar ist.

Die Orientierungsinformationen werden beispielsweise in einer Datenbank gespeichert. Dafür umfasst die Vorrichtung entweder extra Speicher oder verwendet den Speicher der programmierbaren Einrichtung.

In einer bevorzugten Ausführungsform wird das zumindest eine digitale Bild mit den zu dem Messzeitpunkt erfassten Winkelinformationen als Metadaten in einer gemeinsamen Datei gespeichert. Diese werden beispielsweise als Metadaten im Exchangeable Image File Format (Exif) in der Bilddatei gespeichert, die z.B. eine JPEG- oder eine TIFF-Datei sein kann. Auf diese Weise wird eine direkte Verbindung der Bilddaten mit den Positionsdaten festgelegt, ohne hierfür die korrekte Verwaltung der Daten, z.B. in einer Datenbank, sicherstellen zu müssen. In einer weiteren Ausführungsform ist vorgesehen die Verknüpfung zwischen digitalem Bild und Winkelinformationen anders sicherzustellen. Beispielsweise kann es vorgesehen sein, für die Winkelinformationen eine Markierung zu generieren und diese statt der Winkelinformationen in den Metadaten des digitalen Bildes zu speichern, während die Informationen selbst zusammen mit der Markierung in einer Datenbank oder Liste abgelegt werden, was zum einen den Umfang der Metadaten in der Bilddatei verringert, zum anderen z.B. ermöglicht, die Winkelinformationsdaten leicht mit einer Suchfunktion zu durchsuchen.

Es können auch eine Mehrzahl von digitalen Bildern erzeugt werden, die alle z.B. die Position des Orientierungssensors und/oder der Fundstelle beispielsweise aus verschiedenen Perspektiven zeigen und/oder mit unterschiedlichem Zoomfaktoren. In einer Ausführungsform ist es vorgesehen, Bilder zu speichern, die mit unterschiedlichen Kamerasensoren oder unterschiedlichen Betriebsmodi desselben Sensors aufgenommen wurden, beispielsweise zusätzlich mit einem Infrarotsensor.

Erfindungsgemäß haben der Kamerasensor und der Orientierungssensor eine feste Position zueinander und der Orientierungssensor ist dazu eingerichtet, beim Aufnehmen des zumindest einen digitalen Bildes mit dem Kamerasensor zugehörige Winkelinformationen zu seiner aktuellen Orientierung zu erfassen, und die Instruktionen bewirken außerdem, wenn sie von dem Prozessor ausgeführt werden, dass die programmierbare Einrichtung dazu eingerichtet ist, die beim Aufnehmen des zumindest einen digitalen Bildes erfassten zugehörigen Winkelinformationen assoziiert mit dem mindestens einen digitalen Bild zu speichern. Wenn der Orientierungssensor und die Kamera positionsunveränderlich zueinander sind, insbesondere wenn sie sich im selben Gehäuse, z.B. Smartphone, befinden, sieht diese Ausführungsform vor, jeweils auch die Winkelinformationen, d.h. die Orientierungssensordaten bei der Aufnahme des jeweiligen digitalen Bildes zu erfassen und ebenfalls in einer Datenbank oder den Foto-Metadaten o.ä. zu speichern. So kann neben dem Ort der zu identifizierenden Position auf der Oberfläche des Objekts auch die Orientierung der Kamera bei der Aufnahme des jeweiligen Bildes und somit der Blickwinkel nachvollzogen werden.

Erfindungsgemäß bewirken die Instruktionen außerdem, wenn sie von dem Prozessor ausgeführt werden, dass vor dem Aufnehmen des mindestens einen Bildes zu der zu identifizierenden bzw. bereits ermittelten Position auf der Oberfläche des Objekts zu einem oder mehreren für diese ermittelte Position gespeicherten historischen Bilder assoziierte zugehörige Winkelinformationen zum Vergleich bereitgestellt werden. Indem historische, d.h. zu früheren Zeitpunkten aufgenommene digitale Bilder zu der ermittelten Position gespeichert werden, kann beispielsweise eine zeitliche Veränderung einer Fundstelle beobachtet werden, um rechtzeitig Handlungsbedarf zu erkennen. Indem die zugehörigen Winkelinformationen zum Vergleich bereitgestellt werden, kann der Inspekteur, der die Aufnahme mit dem Kamerasensor macht, diese zum Abgleich verwenden, um vergleichbare digitale Bilder ohne Parallaxe zu erzeugen. Erfindungsgemäß ist hierfür eine Benutzerschnittstelle vorgesehen, die dem Benutzer bzw. Inspekteur anzeigt, dass die aktuelle Orientierung des Orientierungssensors bzw. der damit verbundenen Kamera der entspricht, die auch für die historischen digitalen Bilder zu der Position verwendet wurde. Dies kann beispielsweise durch eine optische Anzeige auf einem Bildschirm oder Display erfolgen. Stattdessen oder zusätzlich ist in anderen Ausführungsformen vorgesehen, die Übereinstimmung mit der historischen Orientierung der Kamera bzw. die Abweichung davon dem Benutzer durch akustische Signale und/oder haptisch anzuzeigen, beispielsweise durch Vibration, z.B. wenn die Vorrichtung ein Mobiltelefon umfasst.

In einer Ausführungsform der Vorrichtung basiert die Zuordnungsvorschrift, mit der die zu identifizierende Position auf der Oberfläche des Objekts aufgrund der gemessenen Winkelinformationen ermittelt wird, auf einem dreidimensionalen Modell des Objekts. So kann jede Position auf der Oberfläche zugehörigen Winkelinformationen zugeordnet werden. Dabei realisiert das dreidimensionale Modell selbst die Zuordnungsvorschrift oder diese ist davon abgeleitet. Handelt es sich bei dem Objekt beispielsweise um eine Turbine oder einen Generator, ist es in einer Ausführungsform vorgesehen, dass das die Turbine beschreibende Modell für bestimmte rotationssymmetrische, zugänglich Messbereiche in Abschnitte eingeteilt ist, denen jeweils der Bereich einer Schaufel bzw. eines Stator-Polkerns zugehörig ist. So kann aus dem dreidimensionalen Modell eine Look-Up-Tabelle generiert werden, in der die vom Orientierungssensor erfassten Winkelinformationen nur noch mit einem Matching-Algorithmus anhand der Tabelle bestimmten Schaufeln zugeordnet werden müssen, so dass die Verarbeitung durch die programmierbare Einrichtung sehr effizient und wenig rechenintensiv erfolgen kann.

In einer anderen beispielhaften Ausführungsform ist die Zuordnungsvorschrift durch eine visuelle Darstellung des dreidimensionalen Modells und der erfassten Winkelinformationen realisiert. So kann der Inspekteur bzw. Benutzer der Vorrichtung selbst anhand der visuellen Darstellung die Zuordnung überprüfen. So können auch andere Abschnitte des Objekts, beispielsweise Fundstellen von Fehlern an für den Orientierungssensor schlecht zugänglichen Stellen der identifizierten Position und damit z.B. bei einer Turbine, der dadurch identifizierten Schaufel zugeordnet werden. Die Verwendung eines 3D-Modells erlaubt das Identifizieren einer Position, die einen Fehler aufweist, auch wenn die Position nur schwer zugänglich ist.

Wenn es sich um ein 3D-Modell eines aus mehreren Segmenten bestehenden Objekts handelt, ist es, je nach Form des Objekts, möglich, aus der Kenntnis des 3D-Modells heraus durch Anbringen des Orientierungssensors an einer ggf. beliebigen Stelle aus den Winkelinformationen das jeweilige Segment zu identifizieren. Geeignete Objekte hierfür sind beispielsweise Turbogeneratoren und deren Evolventen-förmige Leiterwindungen, Turbinen, z.B. Dampfturbinen oder Gasturbinen bzw. Komponenten davon, z.B. der Verdichter mit seinen Schaufeln oder die Brennkammer mit ihren Hitzeschildsegmenten.

Liegt ein 3D-Modell des Objekts als Zuordnungsvorschrift vor, können auch auffällige Segmente mit einer komplizierten Form zu den richtigen Segmentnummern zugeordnet werden, so dass sichergestellt ist, dass gegebenenfalls die richtigen, beschädigten Segmente ausgetauscht werden.

Des Weiteren umfasst gemäß einem zweiten Aspekt der Erfindung ein Verfahren zum winkelbasierten Lokalisieren einer Position auf einer Oberfläche eines Objekts zumindest folgende Schritte: Anordnen eines Orientierungssensors, der dazu eingerichtet ist, zumindest zu einem Messzeitpunkt Winkelinformationen zu seiner aktuellen Orientierung zu erfassen, zumindest zu dem Messzeitpunkt in einem bekannten Verhältnis relativ zu einer zu identifizierenden Position auf einer Oberfläche eines Objekts, Erfassen der Winkelinformationen zu dem Messzeitpunkt und Ermitteln der zu identifizierenden Position durch Zuordnen zu den erfassten Winkelinformationen anhand einer Zuordnungsvorschrift für das Objekt, mit der den Winkelinformationen zugehörige Positionen auf der Oberfläche des Objekts zugeordnet werden. Auf diese Weise werden die Vorteile und Besonderheiten der erfindungsgemäßen Vorrichtung zum winkelbasierten Lokalisieren einer Position auf einer Oberfläche eines Objekts auch im Rahmen eines Verfahrens zum winkelbasierten Lokalisieren einer Position auf einer Oberfläche eines Objekts umgesetzt.

In einer Ausführungsform des Verfahrens umfasst das Anordnen, den Orientierungssensor zumindest zu dem Messzeitpunkt zumindest mittelbar in körperlichem Kontakt zu der Oberfläche des Objekts zu bringen. Vorzugsweise wird der Orientierungssensor unmittelbar, z.B. durch Auflegen, beispielsweise, wenn der Sensor der eines Smartphones ist, an die zu identifizierende Position gebracht oder mittelbar, z.B. mit Hilfe einer Halteeinrichtung, die beispielsweise noch besser an das jeweilige Objekt angepasst sein kann, um den Orientierungssensor relativ zur Oberfläche des Objekts an der Position passend auszurichten. Die zumindest mittelbare Anordnung kann sich auch darauf beziehen, dass über der zu identifizierenden Position noch eine weitere Oberfläche, beispielsweise eine Schutzhülle oder Ummantelung mit einem bekannten Abstand zur untersuchenden Oberfläche des Objekts vorhanden sein kann oder dass sich der Orientierungssensor in einem Gehäuse oder Smartphone befinden kann.

In einer weiteren Ausführungsform des Verfahrens umfasst das Anordnen, den Orientierungssensor distanziell bzw. berührungslos derart anzuordnen, dass dieser eine vorgegebene örtliche Relation zu der Oberfläche des Objekts einnimmt. Dies ist insbesondere vorteilhaft, wenn z.B. eine direkte Auflegung durch Hindernisse, Schutzabdeckung oder Oberflächentemperatur nicht möglich ist. In diesem Fall kann der Abstand z.B. sensorgestützt realisiert werden. Beispielweise können zwei, bevorzugt mindestens drei zusätzliche Sensoren, z.B. zur laserbasierten Abstandsmessung verwendet werden, wobei die Winkelaufnahme dann erfolgt, wenn die gewünschte Parallelität zur analysierten Oberfläche erreicht wird.

Erfindungsgemäß umfasst das Verfahren außerdem ein Aufnehmen zumindest eines digitalen Bildes mit Bezug zu der zu identifizierenden Position mit einem Kamerasensor und ein Speichern des zumindest einen digitalen Bildes assoziiert mit den zu dem Messzeitpunkt erfassten Winkelinformationen. Die Assoziierung der erfassten Winkelinformationen mit einem digitalen Bild umfasst dabei, entweder die erfassten Winkelinformationen, aus denen mit Hilfe der Zuordnungsvorschrift die zu identifizierende Position auf der Oberfläche ermittelt werden kann oder direkt bereits die ermittelte Position auf der Oberfläche mit dem digitalen Bild zu verknüpfen, wobei das digitale Bild vorzugsweise entweder die Position des Orientierungssensors auf der Oberfläche des Objekts und/oder die Position der Fundstelle der Auffälligkeit bei der Inspektion zeigt. Es können auch eine Mehrzahl von digitalen Bildern erzeugt werden, die alle z.B. die Position des Sensors und/oder der Fundstelle z.B. aus verschiedenen Perspektiven zeigen oder mit unterschiedlichem Zoom oder mit unterschiedlichen Kamerasensoren oder Betriebsmodi desselben Kamerasensors aufgenommen wurden.

Erfindungsgemäß umfasst das Verfahren, wobei der Kamerasensor und der Orientierungssensor eine feste Position zueinander haben, beim Aufnehmen des zumindest einen digitalen Bildes mit dem Kamerasensor, ein Erfassen, mit dem Orientierungssensor, zugehöriger Winkelinformationen zu seiner aktuellen Orientierung und ein Speichern der beim Aufnehmen des zumindest einen digitalen Bildes erfassten zugehörigen Winkelinformationen assoziiert mit dem mindestens einen digitalen Bild. So wird zu jeder Aufnahme eines digitalen Bildes die Orientierung des Orientierungssensors und damit, aufgrund der festen Position zueinander, z.B. in einem gemeinsamen Gehäuse, die Orientierung des Kamerasensors bei der Aufnahme des digitalen Bildes aufgezeichnet, so dass der Blickwinkel der Kamera nachvollziehbar bleibt und auch vergleichbar mit anderen Bildern zu der derselben Position wird.

Erfindungsgemäß ist vorgesehen, dass das Verfahren umfasst, vor dem Aufnehmen des zumindest einen digitalen Bildes zu der ermittelten Position auf der Oberfläche des Objekts, von zu einem oder mehreren für diese ermittelte Position gespeicherten historischen Bilder assoziierten zugehörigen Winkelinformationen zum Vergleich bereitzustellen. Die hat den Vorteil, dass besser mit historischen, d.h. früher aufgenommenen Bildern verglichen werden kann, weil durch den Vergleich mit den historischen Winkelinformationen sichergestellt werden kann, dass die digitalen Bilder das Objekt alle aus derselben Blickrichtung zeigen und so z.B. keine Parallaxen auftreten.

Erfindungsgemäß umfasst das Verfahren das Bereitstellen, die zu dem einen oder zu den mehreren gespeicherten historischen Bildern assoziierten Winkelinformationen einem Benutzer über eine Benutzer-Schnittstelle im Vergleich zu Winkelinformationen zu der aktuellen Orientierung anzuzeigen. Das Anzeigen kann dabei visuell, aber auch akustisch und/oder haptisch erfolgen, so dass der Benutzer bzw. Inspekteur auf einfache Weise vor der Aufnahme eines aktuellen digitalen Bildes einen Abgleich zur Orientierung bei früheren Aufnahmen vornehmen kann. Ein visueller Abgleich der Winkelinformationen kann z.B. umfassen, dass ein visueller Indikator anzeigt, wenn die Orientierung richtig abgeglichen ist (z.B. roter visueller Marker, wenn nicht abgeglichen, grüner Marker, wenn korrekt ausgerichtet, so dass keine Parallaxe zu früheren Aufnahmen auftritt). Ein akustischer Abgleich kann z.B. umfassen, unterschiedliche Kontrolltöne zu verwenden, je nachdem, ob die Kamera richtig oder falsch ausgerichtet ist (bzw. kein Ton, wenn korrekt). Ein haptischer Abgleich kann z.B. bei Verwendung eines Mobiltelefons bzw. Smartphones umfassen, den Vibrationsalarm zu aktivieren, wenn (oder wenn nicht) die Kamera korrekt ausgerichtet ist.

Gemäß einem dritten Aspekt betrifft die Erfindung außerdem ein Computerprogrammprodukt, das zur Verwendung mit einer Vorrichtung zum winkelbasierten Lokalisieren einer Position auf einer Oberfläche eines Objekts gemäß einer der beschriebenen Ausführungsformen vorgesehen ist. Das Computerprogrammprodukt ist im Anspruch 16 beansprucht.

Das Computerprogrammprodukt wird beispielsweise auf einem computerlesbaren Speichermedium bereitgestellt, d.h. auf einem Speichermedium, das von dem Prozessor bzw. der programmierbaren Einrichtung mit einer geeigneten Einrichtung gelesen werden kann. Ein Speichermedium kann z.B. eine CD-ROM, DVD, BluRay Disk, eine Festplatte, ein Speicherstick, aber auch ein Datenspeicher in einer Cloud o.ä. sein. In einer Ausführungsform sind auch die Modelldaten des Objekts auf dem computerlesbaren Speichermedium (oder einem anderen) gespeichert und werden erst zur Ausführung des Verfahrens in die Vorrichtung geladen.

Weitere Vorteile der vorliegenden Erfindung sind aus der detaillierten Beschreibung und den Abbildungen ersichtlich. Die Erfindung wird nachstehend im Zusammenhang mit der folgenden Beschreibung von Ausführungsbeispielen mit Bezug auf die begleitenden Zeichnungen näher erläutert. Es zeigen:
- Fig. 1: eine schematische Darstellung eines ersten Beispiels einer Vorrichtung zum winkelbasierten Lokalisieren einer Position auf einer Oberfläche eines Objekts gemäß einer Ausführungsform der Erfindung;
- Fig. 2: eine schematische Darstellung eines zweiten Beispiels einer Vorrichtung zum winkelbasierten Lokalisieren einer Position auf einer Oberfläche eines Objekts gemäß einer weiteren Ausführungsform der Erfindung;
- Fig. 3: eine schematische Darstellung eines Beispiels eines Verfahrens zum winkelbasierten Lokalisieren einer Position auf einer Oberfläche eines Objekts gemäß einer weiteren Ausführungsform der Erfindung;
- Fig. 4: eine schematische Darstellung eines Beispiels für kreisförmig auf einem Stator eines Generators verteilten Stator-Polkernen und Möglichkeiten, eine Vorrichtung zum winkelbasierten Lokalisieren einer Position zum Ermitteln der zu einem Stator-Polkern gehörenden Identifikationsnummer zu verwenden;
- Fig. 5: eine schematische Darstellung eines Beispiels für einen Ausschnitt aus einer mit Hitzeschilden ausgekleideten Brennkammer einer Gasturbine;
- Fig. 6: eine schematische Darstellung eines Beispiels für einen Ausschnitt aus einer Dampfturbine mit umlaufend angeordneten Leitschaufeln; und
- Fig. 7, 8 und 9: gemeinsam eine schematische Darstellung eines Prinzips der winkelbasierten Ausrichtung einer Kamera zum Aufnehmen eines digitalen Bildes ohne Parallaxe gegenüber einer historischen Aufnahme.

In den Figuren sind identische oder ähnliche Elemente mit identischen Bezugszeichen versehen, soweit dies zweckmäßig ist.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der vorstehend und nachstehend beschriebenen verschiedenen beispielhaften Ausführungsformen miteinander kombiniert werden können, sofern nicht spezifisch anders angegeben. Die Beschreibung ist deshalb nicht in einschränkendem Sinne aufzufassen, und der Schutzumfang der vorliegenden Erfindung wird durch die angefügten Ansprüche definiert.

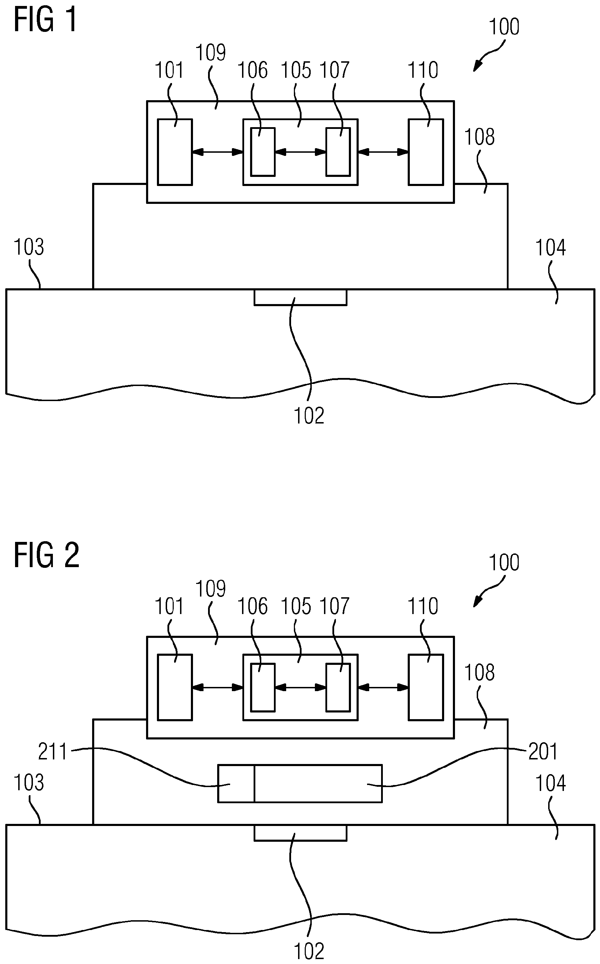

Fig. 1 zeigt eine schematische Darstellung eines ersten Beispiels einer Vorrichtung zum winkelbasierten Lokalisieren einer Position auf einer Oberfläche eines Objekts gemäß einer Ausführungsform der Erfindung. Die Vorrichtung 100 weist einen Orientierungssensor 101 auf, der dazu eingerichtet ist, zumindest zu einem Messzeitpunkt in einem bekannten Verhältnis relativ zu einer zu identifizierenden Position 102 auf einer Oberfläche 103 eines Objekts 104 angeordnet zu werden und zumindest zu dem Messzeitpunkt Winkelinformationen zu seiner aktuellen Orientierung zu erfassen. Das bekannte Verhältnis relativ zu der zu identifizierenden Position 102 auf der Oberfläche 103 wird mit einer Halteeinrichtung 108 hergestellt, deren Unterseite passend zur Oberfläche 103 ebenfalls eben gestaltet ist. So steht der Orientierungssensor 101 mittelbar in körperlichem Kontakt zur Oberfläche 103 des Objekts 104. Die Vorrichtung 100 weist neben dem Orientierungssensor 101 eine programmierbare Einrichtung 105 zumindest mit einem Prozessor 106 und einem Speicher 107 auf. In der gezeigten Ausführungsform sind der Orientierungssensor 101 und die programmierbare Einrichtung 105 Komponenten eines mobilen elektronischen Geräts und in einem gemeinsamen Gehäuse 109 untergebracht. Der Speicher 107 der programmierbaren Einrichtung 105 beinhaltet Instruktionen und zumindest eine Zuordnungsvorschrift für das Objekt 104 mit der Oberfläche 103, mit der Winkelinformationen zugehörige Positionen auf der Oberfläche 103 des Objekts 104 zugeordnet werden. Diese können entweder permanent im Speicher 107 gehalten sein oder beim Ausführen eines Programms oder einer App in den Speicher 107 geladen werden. Die Zuordnungsvorschrift kann beispielsweise separat oder beim Ausführen der Instruktionen in den Speicher 107 (oder einen davon getrennten Speicher) geladen werden. Die Instruktionen bewirken zumindest, wenn sie von dem Prozessor 106 ausgeführt werden (wobei es sich, je nach Ausführungsform, physisch um einen einzelnen, aber auch um mehrere Prozessoren bzw. Prozessorkerne handeln kann), dass die programmierbare Einrichtung 105 die zu dem Messzeitpunkt von dem Orientierungssensor 101 erfassten Winkelinformationen empfängt und die zu identifizierende Position 102 durch Zuordnen zu den erfassten Winkelinformationen anhand der Zuordnungsvorschrift ermittelt. Zudem weist die Vorrichtung 100 einen Kamerasensor 110 auf, und die Instruktionen, wenn sie von dem Prozessor 106 ausgeführt werden, bewirken außerdem, dass die programmierbare Einrichtung 105 dazu eingerichtet ist, zumindest ein von dem Kamerasensor 110 aufgenommenes digitales Bild mit den zu dem Messzeitpunkt erfassten Winkelinformationen assoziiert zu speichern.

Fig. 2 zeigt eine schematische Darstellung eines zweiten Beispiels einer Vorrichtung zum winkelbasierten Lokalisieren einer Position auf einer Oberfläche eines Objekts gemäß einer Ausführungsform der Erfindung. Da Fig. 2 in wesentlichen Teilen Fig. 1 entspricht, werden der Übersichtlichkeit halber hier nur die Komponenten erläutert, die sich von denen in Fig. 1 unterscheiden, und im Übrigen wird auf die Beschreibung von Fig. 1 verwiesen.

Bei dem gezeigten Beispiel weist die Halteeinrichtung 108 zusätzlich selbst einen Orientierungssensor 201 auf, sowie eine Kommunikationsschnittstelle 211, über die erfasste Winkelinformationen an die programmierbare Einrichtung 105 übertragbar sind, wobei die Kommunikationsschnittstelle 211 eine Schnittstelle für drahtlose Kommunikation ist. Indem der Orientierungssensor 201 in der Halteeinrichtung 108 untergebracht ist, kann er größer, voluminöser und mit genaueren Hardware-Komponenten realisiert sein, besser geschirmt, mit wirkungsvollerer Kompensation von Einflüssen externer Magnetfelder, die den Orientierungssensor beeinflussen könnten. Die Berücksichtigung externer Magnetfelder kann insbesondere im Umfeld von Anlagen eines Kraftwerks relevant sein. In der gezeigten Ausführungsform umfasst das Gehäuse 109 außerdem weiterhin den Orientierungssensor 101, der entweder nicht verwendet wird oder ebenfalls zum Erfassen von Winkelinformationen dient, um die Redundanz zu Kontroll- oder Kalibrierungszwecken zu nutzen.

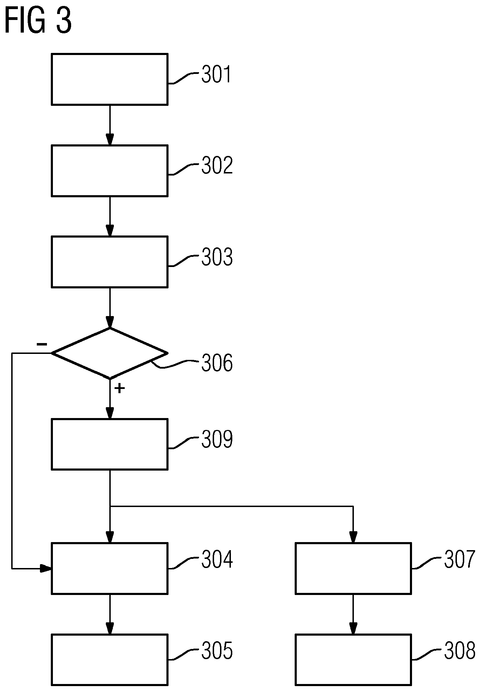

Fig. 3 zeigt eine schematische Darstellung eines Beispiels eines Verfahrens zum winkelbasierten Lokalisieren einer Position auf einer Oberfläche eines Objekts gemäß einer weiteren Ausführungsform der Erfindung. Das Verfahren weist zumindest folgende Schritte auf: Anordnen 301 eines Orientierungssensors, der dazu eingerichtet ist, zumindest zu einem Messzeitpunkt Winkelinformationen zu seiner aktuellen Orientierung zu erfassen, zumindest zu dem Messzeitpunkt in einem bekannten Verhältnis relativ zu einer zu identifizierenden Position auf einer Oberfläche eines Objekts, Erfassen 302 der Winkelinformationen zu dem Messzeitpunkt und Ermitteln 303 der zu identifizierenden Position durch Zuordnen zu den erfassten Winkelinformationen anhand einer Zuordnungsvorschrift für das Objekt, mit der den Winkelinformationen zugehörige Positionen auf der Oberfläche des Objekts zugeordnet werden.

In der gezeigten Ausführungsform weist das Verfahren zudem einen Schritt des Aufnehmens 304, mit einem Kamerasensor, zumindest eines digitalen Bildes mit Bezug zu der zu identifizierenden Position auf, wobei in einem nächsten Schritt ein Speichern 305 des zumindest einen digitalen Bildes assoziiert mit den zu dem Messzeitpunkt erfassten Winkelinformationen erfolgt.

Zusätzlich ist in der gezeigten Ausführungsform des Verfahrens vorgesehen, zu überprüfen 306, ob der Kamerasensor und der Orientierungssensor eine feste Position zueinander haben. Ist dies der Fall, erfolgt beim Aufnehmen des zumindest einen digitalen Bildes mit dem Kamerasensor außerdem ein Erfassen 307, mit dem Orientierungssensor, von zugehörigen Winkelinformationen zu seiner aktuellen Orientierung, sowie ein Speichern 308 der beim Aufnehmen des zumindest einen digitalen Bildes erfassten zugehörigen Winkelinformationen assoziiert mit dem mindestens einen digitalen Bild.

Zusätzlich ist bei dieser Ausführungsform vorgesehen, in dem Fall, dass der Kamerasensor und der Orientierungssensor eine feste Position zueinander haben, vor dem Aufnehmen des zumindest einen digitalen Bildes zu der ermittelten Position auf der Oberfläche des Objekts, zum Vergleich zu einem oder mehreren für diese ermittelte Position gespeicherten historischen Bilder assoziierten zugehörige Winkelinformationen zum Vergleich bereitzustellen 309, wobei das Bereitstellen 309 insbesondere beinhaltet, die zu dem einen oder zu den mehreren gespeicherten historischen Bildern assoziierten Winkelinformationen einem Benutzer über eine Benutzer-Schnittstelle im Vergleich zu Winkelinformationen zu der aktuellen Orientierung anzuzeigen.

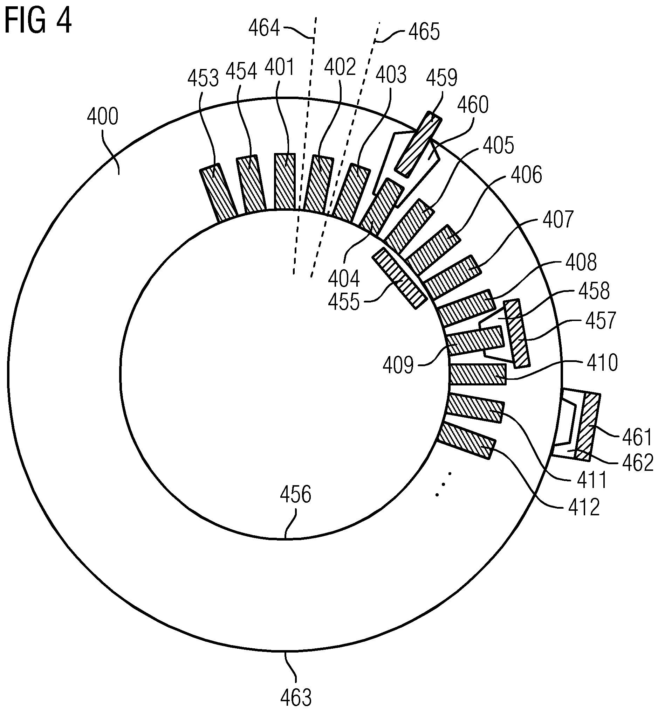

Fig. 4 zeigt eine schematische Darstellung eines Beispiels für kreisförmig über einen Stator 400 eines Generators verteilte Wicklungsleiter bzw. Nuten im Magnetkern und zugehöriger Leiter (401, 402, 403, 404, 405, 406, 407, 408, 409, 410, 411, 412, ..., 453, 454) und Möglichkeiten, eine Vorrichtung zum winkelbasierten Lokalisieren einer Position zum Ermitteln der zu einer Nut im Stator-Magnetkern gehörenden Identifikationsnummer zu verwenden.

Um beispielsweise die Nut 406 im Magnetkern zu lokalisieren, wird eine erste Vorrichtung 455 zum winkelbasierten Lokalisieren einer Position auf einer Oberfläche eines Objekts, die mit einem Smartphone realisiert sein kann, auf die innere Oberfläche 456 des Generator-Stators über der zu identifizierenden Position aufgelegt.

Um beispielsweise die Nut 409 im Magnetkern zu lokalisieren, wird eine zweite Vorrichtung 457 zum winkelbasierten Lokalisieren einer Position auf einer Oberfläche eines Objekts, die ebenfalls mit einem Smartphone realisiert sein kann, an einer Halterung 458 befestigt, die sich passgenau mit dem Leiter in der Nut 409 im Stator-Magnetkern verbinden lässt, so dass die Vorrichtung 457 mit dem Orientierungssensor mittelbar mit der Nut 409 verbunden ist und einen bekannten Winkel von 90° relativ zur Nut 409 aufweist.

Um beispielsweise die Nut 404 zu lokalisieren, wird eine dritte Vorrichtung 459 zum winkelbasierten Lokalisieren einer Position auf einer Oberfläche eines Objekts, die ebenfalls mit einem Smartphone realisiert sein kann, an einer weiteren Halterung 460 befestigt, die sich passgenau mit dem Leiter in der Nut 404 verbinden lässt, so dass die dritte Vorrichtung 459 mit ihrem Orientierungssensor mittelbar mit der Nut 404 verbunden ist und einen bekannten Winkel von 0° relativ zur Nut 404 aufweist.

Um beispielsweise die Nut 411 zu lokalisieren, wird eine vierte Vorrichtung 461 zum winkelbasierten Lokalisieren einer Position auf einer Oberfläche eines Objekts, die ebenfalls mit einem Smartphone realisiert sein kann, an noch einer weiteren Halterung 462 befestigt bzw. an diese angelegt. Diese ist dazu ausgelegt, auf einer äußeren Oberfläche 463 des Stators 400 angeordnet zu werden.

Um die mit den Vorrichtungen gemessenen diskreten Winkelinformationen auf ein 3D-Modell des Stators abzubilden, kann beispielsweise das 3D-Modell des Stators 400 unterteilt werden in eine Anzahl von Segmenten, die der Anzahl der Leiter bzw. der Nuten entspricht. Ein solches Segment ist in Fig. 4 durch die gestrichelten Linien 464, 465 angedeutet. Für 54 Segmente entspricht ein Winkelbereich dann beispielsweise jeweils einem Bereich von -0,5*(360°/54) bis +0,5*(360°/54) gegenüber der Idealposition in der Mitte des jeweiligen Segments. Für die Segmente kann eine einfache Look-Up-Tabelle erzeugt werden, und vom Orientierungssensor der Vorrichtung gemessene Winkelinformationen können direkt zugeordnet werden.

Statt eine erste, zweite, dritte und vierte Vorrichtung 455, 457, 459, 461 zu verwenden, wird i.d.R. nur eine Vorrichtung verwendet, die nacheinander ggf. mit Hilfe einer Halteeinrichtung an den gezeigten Positionen angebracht wird.

Eine Inspektion des Objekts, in diesem Fall des Stators, könnte unter Verwendung einer der erfindungsgemäßen Vorrichtungen 455, 457, 459, 461 folgendermaßen ablaufen: Zuerst findet der Inspekteur eine zu identifizierende Position. Dann befestigt er die Vorrichtung 457, beispielsweise ein Smartphone, das eine App ausführt, die die Instruktionen enthält und ein Modell des Stators 400 als Zuordnungsvorschrift in seinem Speicher geladen hat, an der Halterung 458 und dann die Halterung 458 an dem zu identifizierenden Leiter (in diesem Fall in der Nut 409). Der Inspekteur löst beispielsweise über einen Button auf dem Benutzer-Interface der von der Vorrichtung 457 ausgeführten App die Erfassung der Winkelinformationen aus. Die App vergibt zunächst einen Identifikator für die gemessenen Winkelinformationen oder ermittelt direkt durch Zugriff auf die entsprechend dem 3D-Modell des Stators erzeugte Look-Up-Tabelle, dass es sich um die Nut 409 handelt. Dann entfernt der Inspekteur die Halterung 458 von dem Leiter in der Nut 409 und ggf. auch die Vorrichtung 457 von der Halterung 458. Nun wird eine Kamera-App gestartet und der Inspekteur nimmt eines oder mehrere digitale Bilder von der identifizierten bzw. zu identifizierenden Position auf. Die Bilder werden dann zusammen mit dem Identifikator oder direkt mit den Winkelinformationen als Metadaten gespeichert, beispielsweise als Exif-Daten, die den Bilddaten hinzugefügt werden.

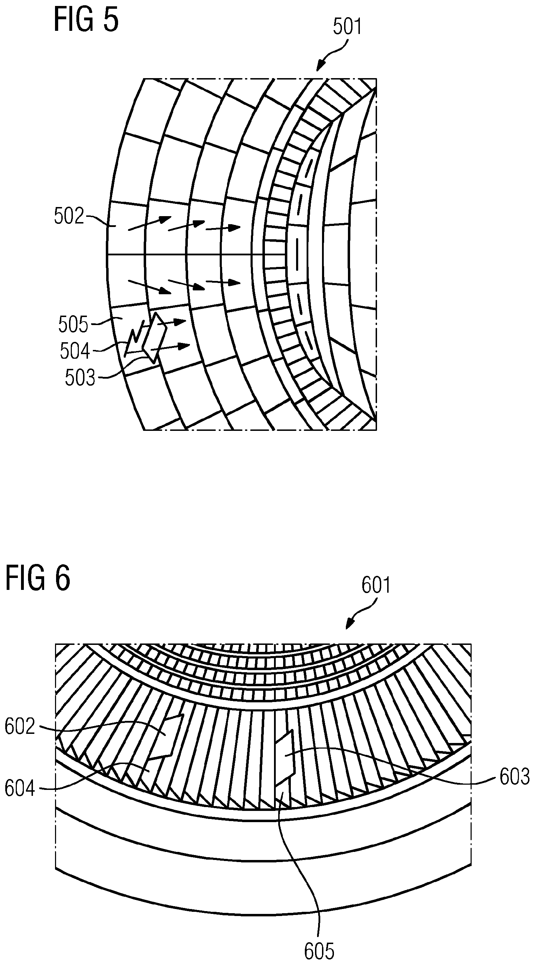

Fig. 5 zeigt eine schematische Darstellung eines Beispiels für einen Ausschnitt aus einer mit Hitzeschilden ausgekleideten Brennkammer 501 einer Gasturbine. Die Brennkammer weist eine Vielzahl von Hitzeschilden auf, beispielsweise das Hitzeschild 502. Die gezeigten Pfeile deuten eine Orientierung der jeweils zugehörigen Hitzeschilde an. Aufgrund der Form der Brennkammer unterscheidet sich die jeweilige Orientierung bzw. Ausrichtung der Hitzeschilder zumindest leicht voneinander, so dass die Bestimmung der Orientierung mit einem Orientierungssensor erlaubt, die Hitzeschilder eindeutig zu identifizieren. Im gezeigten Beispiel ist die zu identifizierende Position ein Riss 504 in Hitzeschild 505. Durch Auflegen einer erfindungsgemäßen Vorrichtung 503 zum winkelbasierten Lokalisieren einer Position auf einer Oberfläche eines Objekts kann das betroffene Hitzeschild 505 und auch der Verlauf des Risses 504 ermittelt werden.

Fig. 6 zeigt eine schematische Darstellung eines Beispiels für einen Ausschnitt aus einer Dampfturbine 601 mit umlaufend angeordneten Leitschaufeln. Dabei wird die Vorrichtung 602, 603 zum winkelbasierten Lokalisieren einer Position auf einer Oberfläche eines Objekts, bei der es sich um ein Smartphone handeln kann, auf die jeweils zu lokalisierende Leitschaufel 604, 605 aufgelegt, um deren Orientierung zu ermitteln, um dann anhand eines 3D-Modells der Dampfturbine 601 den gemessenen Orientierungen die zugehörigen Leitschaufeln zuzuordnen.

Genauso kann die Vorrichtung 602, 603 genutzt werden, um von außen anhand der Wölbung des Gehäuses der Turbine auf die aktuelle Position des Sensors zu schließen.

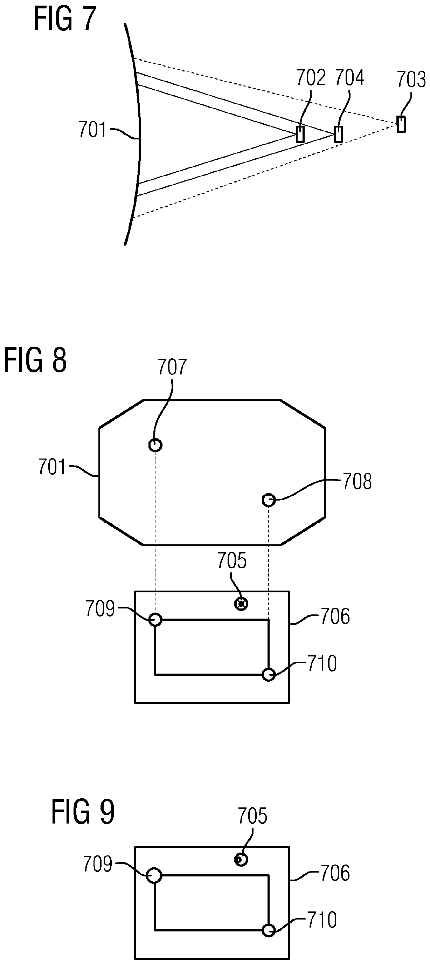

Fig. 7, 8 und 9 zeigen gemeinsam eine schematische Darstellung eines Prinzips der winkelbasierten Ausrichtung einer Kamera zum Aufnehmen eines digitalen Bildes ohne Parallaxe gegenüber einer historischen Aufnahme.

Umfasst die erfindungsgemäße Vorrichtung einen Kamerasensor, können damit digitale Bilder aufgenommen werden, die der zu identifizierenden Position zugeordnet bleiben sollen. Damit eine Vergleichbarkeit der aufgenommenen Bilder mit früher aufgenommenen Bildern gewährleistet bleibt, sollen die Bilder aus möglichst derselben Blickrichtung ohne Parallaxe aufgenommen werden.

Fig. 7 zeigt dabei drei verschiedene Kamerapositionen 702, 703, 704 und -ausrichtungen bei der Aufnahme eines Bildes von der Oberfläche eines Objekts 701. In der ersten Kameraposition 702 entstand die historische Aufnahme des Objekts 701. In der zweiten Position 703 entsteht eine Aufnahme, die eine Parallaxe gegenüber der historischen Aufnahme aufweist, da sich die Orientierung bzw. Ausrichtung der Kamera in der zweiten Position 703 von der ursprünglichen Ausrichtung in der ersten Kameraposition 702 unterscheidet. In der dritten Kameraposition 704 stimmt hingegen die Ausrichtung der Kamera mit der in der ersten Kameraposition 702 überein und es kann ein Bild ohne Parallaxe erzeugt werden, so dass ein Vergleich mit dem aus der ersten Kameraposition 702 aufgenommenen Bild einfach möglich ist, auch wenn das Sichtfeld bzw. der aufgenommene Objektausschnitt bei gleichen Zoomfaktor der Kamera unterschiedlich ist, da sich die Entfernung zum Objekt 701 unterscheidet.

Fig. 8 zeigt eine mögliche Darstellung auf einem Bildschirm der Kamera bzw. der Vorrichtung, beispielsweise als Überlagerung über das aktuelle Kamerabild, für den Fall, dass sich die Kamera in der dritten Kameraposition 704 befindet. Ein Indikator 705 zeigt visuell auf einem Bildschirm 706 der Kamera an, dass die Ausrichtung der Kameras übereinstimmt. Zusätzlich kann auf dem Bildschirm 706 angezeigt werden, dass auch der Zoomfaktor so gewählt ist, dass derselbe Bildausschnitt gezeigt wird. Alternativ kann die Position der Kamera angepasst werden, bis die dritte Kameraposition 704 mit der ersten Kameraposition 702 übereinstimmt. Dies ist für den Benutzer im gezeigten Fall an zwei im Bildausschnitt identifizierten Objektelementen 707, 708 erkennbar. Liegen die zugehörigen Bildelemente 709, 710 auf den Ecken desselben Rechtecks, das durch die historische Aufnahme definiert ist, ist derselbe Bildausschnitt gezeigt, sofern die Objektelemente ortsfest geblieben sind.

Fig. 9 zeigt eine mögliche Darstellung auf dem Bildschirm der Kamera bzw. der Vorrichtung für den Fall an, dass sich die Kamera in der zweiten Kameraposition 703 befindet. Der Indikator 705 zeigt an, dass die Ausrichtung der Kameras nicht übereinstimmt, wohingegen der Bildausschnitt den historischen Bildausschnitt umfasst, jedoch unter einer Parallaxe.

Wird der beschriebene Kameraorientierungsabgleich beispielsweise bei der bezüglich Fig. 4 beschriebenen Inspektion vorgesehen, kann ein möglicher weiterer Ablauf der Inspektion unter Verwendung von Kamerabildern folgendermaßen gestaltet sein: Der Inspekteur ruft zumindest eine historische Aufnahme auf, beispielsweise anhand des Identifikators, der mit den Bildern abgespeichert wurde. Die in den Metadaten enthaltenen historischen Winkelinformationen werden verwendet, um die Anzeigen wie in Fig. 8 und Fig. 9 zu erzeugen. Der Inspekteur bewegt die Kamera solange, bis die Ausrichtung als übereinstimmend mit der historischen Ausrichtung angezeigt wird und der Inspekteur erzeugt ein aktuelles Bild, von dem wiederum die zugehörigen Winkelinformationen oder ein Identifikator, der auf sie verweist, in den Metadaten der neu erzeugten Bilddatei gespeichert werden.

Die Figuren sind nicht notwendigerweise detailgetreu und maßstabsgetreu und können beispielsweise vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Es versteht sich, dass Verfahrensschritte, obwohl gemäß einer gewissen geordneten Reihenfolge beschrieben, zum Teil in einer anderen als der hier beschriebenen Reihenfolge ausgeführt werden könnten. Es versteht sich weiterhin, dass gewisse Schritte gleichzeitig durchgeführt werden könnten, dass andere Schritte hinzugefügt werden könnten oder dass gewisse, hier beschriebene Schritte weggelassen werden könnten. Mit anderen Worten: Es werden die vorliegenden Beschreibungen zum Zwecke der Veranschaulichung bestimmter Ausführungsformen bereitgestellt und sollten nicht als Beschränkung des offenbarten Gegenstands aufgefasst werden.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, dass sie die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.

Obwohl die Erfindung durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (100) zum winkelbasierten Lokalisieren einer Position auf einer Oberfläche eines Objekts,
umfassend
- einen Orientierungssensor (101), der dazu eingerichtet ist, zumindest zu einem Messzeitpunkt in einem bekannten Verhältnis relativ zu einer zu identifizierenden Position (102) auf einer Oberfläche (103) eines Objekts (104) angeordnet zu werden und zumindest zu dem Messzeitpunkt Winkelinformationen zu seiner aktuellen Orientierung zu erfassen; und
- eine programmierbare Einrichtung (105) zumindest mit einem Prozessor (106) und einem Speicher (107), wobei der Speicher (107) Instruktionen und zumindest eine Zuordnungsvorschrift für das Objekt (104) mit der Oberfläche (103) aufweist, mit der Winkelinformationen zugehörige Positionen auf der Oberfläche (103) des Objekts (104) zugeordnet werden, und
wobei die Instruktionen, wenn sie von dem Prozessor (106) ausgeführt werden, bewirken, dass
die programmierbare Einrichtung (105) die zu dem Messzeitpunkt von dem Orientierungssensor (101) erfassten Winkelinformationen empfängt und
die zu identifizierende Position (102) durch Zuordnen zu den erfassten Winkelinformationen anhand der Zuordnungsvorschrift ermittelt, wobei die Vorrichtung außerdem einen Kamerasensor (110) umfasst und
wobei die Instruktionen, wenn sie von dem Prozessor (106) ausgeführt werden, außerdem bewirken, dass die programmierbare Einrichtung (105) dazu eingerichtet ist, zumindest ein von dem Kamerasensor (110) aufgenommenes digitales Bild mit den zu dem Messzeitpunkt erfassten Winkelinformationen assoziiert zu speichern,
wobei der Kamerasensor (110) und der Orientierungssensor (101) eine feste Position zueinander haben und der Orientierungssensor (101) dazu eingerichtet ist, beim Aufnehmen des zumindest einen digitalen Bildes mit dem Kamerasensor (110) zugehörige Winkelinformationen zu seiner aktuellen Orientierung zu erfassen und die Instruktionen, wenn sie von dem Prozessor (106) ausgeführt werden, außerdem bewirken, dass die programmierbare Einrichtung (105) dazu eingerichtet ist, die beim Aufnehmen des zumindest einen digitalen Bildes erfassten zugehörigen Winkelinformationen assoziiert mit dem mindestens einen digitalen Bild zu speichern,
wobei die Instruktionen, wenn sie von dem Prozessor (106) ausgeführt werden, außerdem bewirken, dass vor dem Aufnehmen des mindestens einen Bildes zu der zu identifizierenden Position (102) auf der Oberfläche (103) des Objekts (104) zu einem oder mehreren für diese ermittelte Position gespeicherten historischen Bilder assoziierte zugehörige Winkelinformationen zum Vergleich bereitgestellt werden, und wobei die Vorrichtung außerdem eine Benutzerschnittstelle aufweist, die einem Benutzer anzeigt, ob die aktuelle Orientierung des Orientierungssensors der entspricht, die für das eine oder die mehreren historischen Bilder zu der Position verwendet wurden.

2. Vorrichtung nach Anspruch 1,
wobei der Orientierungssensor (101) dazu eingerichtet ist, zumindest zu dem Messzeitpunkt zumindest mittelbar in körperlichem Kontakt zu der Oberfläche (103) des Objekts (104) gebracht zu werden.

3. Vorrichtung nach Anspruch 1,
wobei der Orientierungssensor (101) dazu eingerichtet ist, berührungslos eine vorgegebene örtliche Relation zu der Oberfläche (103) des Objekts (104) einzunehmen.

4. Vorrichtung nach Anspruch 1 oder Anspruch 2, umfassend eine Halteeinrichtung (108),
die zumindest das Anordnen des Orientierungssensors (101) in dem bekannten Verhältnis relativ zu der zu identifizierenden Position (102) auf der Oberfläche (103) des Objekts (104) ermöglicht.

5. Vorrichtung nach einem der vorhergehenden Ansprüche, wobei der Orientierungssensor (101) und die programmierbare Einrichtung (105) in einem gemeinsamen Gehäuse (109) untergebracht sind.

6. Vorrichtung nach Anspruch 5,
wobei der Orientierungssensor (101) und die programmierbare Einrichtung (105) Komponenten eines mobilen elektronischen Geräts,
vorzugsweise eines Mobiltelefons, sind.

7. Vorrichtung nach Anspruch 4,
wobei die Halteeinrichtung (108) den Orientierungssensor (201) umfasst.

8. Vorrichtung nach Anspruch 7,
wobei die Halteeinrichtung (108) über eine Kommunikationsschnittstelle (211) verfügt,
über die die erfassten Winkelinformationen an die programmierbare Einrichtung (105) übertragbar sind.

9. Vorrichtung nach Anspruch 8,
wobei die Kommunikationsschnittstelle (211) eine Schnittstelle für drahtlose Kommunikation ist.

10. Vorrichtung nach Anspruch 1,
wobei das zumindest eine digitale Bild mit den zu dem Messzeitpunkt erfassten Winkelinformationen als Metadaten in einer gemeinsamen Datei gespeichert wird.

11. Vorrichtung nach einem der vorhergehenden Ansprüche, wobei die Zuordnungsvorschrift auf einem dreidimensionalen Modell des Objekts (104) basiert.

12. Vorrichtung nach Anspruch 11,
wobei die Zuordnungsvorschrift durch eine visuelle Darstellung des dreidimensionalen Modells und der erfassten Winkelinformationen realisiert wird.

13. Verfahren zum winkelbasierten Lokalisieren einer Position auf einer Oberfläche eines Objekts,
umfassend
Anordnen (301) eines Orientierungssensors, der dazu eingerichtet ist, zumindest zu einem Messzeitpunkt Winkelinformationen zu seiner aktuellen Orientierung zu erfassen, zumindest zu dem Messzeitpunkt in einem bekannten Verhältnis relativ zu einer zu identifizierenden Position auf einer Oberfläche eines Objekts;
Erfassen (302) der Winkelinformationen zu dem Messzeitpunkt; und
Ermitteln (303) der zu identifizierenden Position durch Zuordnen zu den erfassten Winkelinformationen anhand einer Zuordnungsvorschrift für das Objekt, mit der den Winkelinformationen zugehörige Positionen auf der Oberfläche des Objekts zugeordnet werden;
Aufnehmen (304) zumindest eines digitalen Bildes mit Bezug zu der zu identifizierenden Position mit einem Kamerasensor, wobei der Kamerasensor und der Orientierungssensor eine feste Position zueinander haben;
Speichern (305)des zumindest einen digitalen Bildes assoziiert mit den zu dem Messzeitpunkt erfassten Winkelinformationen;
beim Aufnehmen des zumindest einen digitalen Bildes mit dem Kamerasensor, erfassen (307), mit dem Orientierungssensor, zugehöriger Winkelinformationen zu seiner aktuellen Orientierung; und Speichern (308) der beim Aufnehmen des zumindest einen digitalen Bildes erfassten zugehörigen Winkelinformationen assoziiert mit dem mindestens einen digitalen Bild; wobei das Verfahren außerdem umfasst
vor dem Aufnehmen des zumindest einen digitalen Bildes zu der ermittelten Position auf der Oberfläche des Objekts, Bereitstellen (309) von zu einem oder mehreren für diese ermittelte Position gespeicherten historischen Bilder assoziierten zugehörigen Winkelinformationen zum Vergleich, wobei das Bereitstellen (309) umfasst,
die zu dem einen oder zu den mehreren gespeicherten historischen Bildern assoziierten Winkelinformationen einem Benutzer über eine Benutzer-Schnittstelle im Vergleich zu Winkelinformationen zu der aktuellen Orientierung anzuzeigen.

14. Verfahren nach Anspruch 13,
wobei das Anordnen (301) umfasst,
den Orientierungssensor zumindest zu dem Messzeitpunkt zumindest mittelbar in körperlichem Kontakt zu der Oberfläche des Objekts zu bringen.

15. Verfahren nach Anspruch 13,
wobei das Anordnen (301) umfasst,
den Orientierungssensor berührungslos derart anzuordnen, dass dieser eine vorgegebene örtliche Relation zu der Oberfläche des Objekts einnimmt.

16. Computerprogrammprodukt zur Verwendung mit einer Vorrichtung zum winkelbasierten Lokalisieren einer Position auf einer Oberfläche eines Objekts gemäß einem der Ansprüche 1 bis 12,
wobei das Computerprogrammprodukt Instruktionen umfasst, die, wenn sie von dem Prozessor ausgeführt werden, zumindest bewirken, dass
die Vorrichtung gemäß einem der Ansprüche 1 bis 12 die Verfahrensschritte nach Anspruch 13 ausgenommen des Schrittes des Anordnens des Orientierungssensors ausführt.

## Claims

1. Apparatus (100) for the angle-based localization of a position on a surface of an object,
comprising
- an orientation sensor (101) which is configured to be arranged in a known relationship relative to a position (102) to be identified on a surface (103) of an object (104) at least at a measurement time and to capture angle information relating to its current orientation at least at the measurement time; and
- a programmable device (105) at least with a processor (106) and a memory (107), wherein the memory (107) has instructions and at least one assignment rule for the object (104) with the surface (103), which rule is used to assign associated positions on the surface (103) of the object (104) to angle information, and
wherein the instructions, when executed by the processor (106), cause
the programmable device (105) to receive the angle information captured by the orientation sensor (101) at the measurement time and
to determine the position (102) to be identified by means of assignment to the captured angle information on the basis of the assignment rule, wherein the apparatus also comprises a camera sensor (110), and
wherein the instructions, when executed by the processor (106), also cause the programmable device (105) to be configured to store at least one digital image recorded by the camera sensor (110) in association with the angle information captured at the measurement time,
wherein the camera sensor (110) and the orientation sensor (101) have a fixed position with respect to one another, and the orientation sensor (101) is configured to capture associated angle information relating to its current orientation when recording the at least one digital image with the camera sensor (110), and the instructions, when executed by the processor (106), also cause the programmable device (105) to be configured to store the associated angle information captured when recording the at least one digital image in association with the at least one digital image,
wherein the instructions, when executed by the processor (106), also cause, before recording the at least one image for the position (102) to be identified on the surface (103) of the object (104), associated angle information associated with one or more historical images stored for this determined position to be provided for comparison, and
wherein the apparatus also has a user interface which indicates to a user whether the current orientation of the orientation sensor corresponds to that used for the one or more historical images for the position.

2. Apparatus according to Claim 1,
wherein the orientation sensor (101) is configured to be at least indirectly brought into physical contact with the surface (103) of the object (104) at least at the measurement time.

3. Apparatus according to Claim 1,
wherein the orientation sensor (101) is configured to contactlessly assume a predefined local relationship with respect to the surface (103) of the object (104).

4. Apparatus according to Claim 1 or Claim 2,
comprising a holding device (108)
which makes it possible to at least arrange the orientation sensor (101) in the known relationship relative to the position (102) to be identified on the surface (103) of the object (104).

5. Apparatus according to one of the preceding claims,
wherein the orientation sensor (101) and the programmable device (105) are accommodated in a common housing (109).

6. Apparatus according to Claim 5,
wherein the orientation sensor (101) and the programmable device (105) are components of a mobile electronic unit, preferably a mobile telephone.

7. Apparatus according to Claim 4,
wherein the holding device (108) comprises the orientation sensor (201).

8. Apparatus according to Claim 7,
wherein the holding device (108) has a communication interface (211)
which can be used to transmit the captured angle information to the programmable device (105).

9. Apparatus according to Claim 8,
wherein the communication interface (211) is an interface for wireless communication.

10. Apparatus according to Claim 1,
wherein the at least one digital image is stored with the angle information captured at the measurement time as metadata in a common file.

11. Apparatus according to one of the preceding claims,
wherein the assignment rule is based on a three-dimensional model of the object (104).

12. Apparatus according to Claim 11,
wherein the assignment rule is implemented by means of a visual representation of the three-dimensional model and of the captured angle information.

13. Method for the angle-based localization of a position on a surface of an object,
comprising
arranging (301) an orientation sensor, which is configured to capture angle information relating to its current orientation at least at a measurement time, in a known relationship relative to a position to be identified on a surface of an object at least at the measurement time;
capturing (302) the angle information at the measurement time; and
determining (303) the position to be identified by means of assignment to the captured angle information on the basis of an assignment rule for the object, which rule is used to assign associated positions on the surface of the object to the angle information;
recording (304) at least one digital image with respect to the position to be identified using a camera sensor, wherein the camera sensor and the orientation sensor have a fixed position with respect to one another;
storing (305) the at least one digital image in association with the angle information captured at the measurement time; when recording the at least one digital image using the camera sensor,
using the orientation sensor to capture (307) associated angle information relating to its current orientation; and
storing (308) the associated angle information captured when recording the at least one digital image in association with the at least one digital image; wherein the method also comprises,
before recording the at least one digital image for the determined position on the surface of the object,
providing (309) associated angle information associated with one or more historical images stored for this determined position for comparison,
wherein the providing (309) comprises
displaying the angle information associated with the one or more stored historical images to a user via a user interface in comparison with angle information relating to the current orientation.

14. Method according to Claim 13,
wherein the arranging (301) comprises
at least indirectly bringing the orientation sensor into physical contact with the surface of the object at least at the measurement time.

15. Method according to Claim 13,
wherein the arranging (301) comprises
contactlessly arranging the orientation sensor in such a manner that it assumes a predefined local relationship with respect to the surface of the object.

16. Computer program product for use with an apparatus for the angle-based localization of a position on a surface of an object according to one of Claims 1 to 12,
wherein the computer program product comprises instructions which, when executed by the processor, at least cause the apparatus according to one of Claims 1 to 12 to carry out the method steps according to Claim 13, apart from the step of arranging the orientation sensor.

## Revendications

1. Installation (100) de localisation, reposant sur un angle, d'une position à la surface d'un objet,
comprenant
- un capteur (101) d'orientation, qui est conçu pour être disposé sur une surface (103) d'un objet (104) au moins à un instant de mesure, dans une relation connue par rapport à une position (102) à identifier et pour détecter au moins à l'instant de mesure des informations angulaires sur son orientation en cours ; et
- un dispositif (105) programmable ayant au moins un processeur (106) et une mémoire (107), dans lequel la mémoire (107) a des instructions et au moins une prescription d'association de l'objet (104) à la surface (103), par laquelle des positions appartenant aux informations angulaires sont associées à la surface (103) de l'objet (104), et
dans laquelle les instructions, lorsqu'elles sont exécutées par le processeur (106), font que
le dispositif (105) programmable reçoit à l'instant de mesure des informations d'angle détectées par le capteur (101) d'orientation et
détermine à l'aide de la prescription d'association la position (102) à identifier par association aux informations d'angle détectées, l'installation comprenant en outre un capteur (110) à appareil photographique, et
dans lequel les instructions, lorsqu'elles sont exécutées par le processeur (106), font en outre que le dispositif (105) programmable est conçu pour mettre en mémoire, de manière associée, au moins une image numérique enregistrée par le capteur (110) à appareil photographique avec les informations d'angle détectées à l'instant de mesure,
dans lequel le capteur (110) à appareil photographique et le capteur (101) d'orientation ont, l'un par rapport à l'autre, une position fixe et le capteur (101) d'orientation est conçu pour, lorsque le capteur (110) à appareil photographique enregistre au moins une image numérique, détecter des informations d'angle associées à son orientation en cours et les instructions, lorsqu'elles sont exécutées par le processeur (106), font en outre que le dispositif (105) programmable est conçu pour, lors de l'enregistrement de la au moins une image numérique, mettre en mémoire des informations d'angle détectées associées à la au moins une image numérique, dans laquelle les instructions, lorsqu'elles sont exécutées par le processeur (106) font en outre que, avant l'enregistrement de la au moins une image se rapportant à la position (102) à identifier à la surface (103) de l'objet (104), on dispose pour la comparaison d'informations d'angle associé à une ou à plusieurs images historiques mises en mémoire pour cette position déterminée, et dans laquelle l'installation a en outre une interface d'utilisateur, qui indique à un utilisateur si l'orientation en cours du capteur d'orientation correspond à celle qui a été utilisée par rapport à la position pour la une ou les plusieurs images historiques.

2. Installation suivant la revendication 1,
dans laquelle le capteur (101) d'orientation est conçu pour être au moins à l'instant de mesure mis en contact corporel au moins indirectement avec la surface (103) de l'objet (104).

3. Installation suivant la revendication 1,
dans lequel le capteur (101) d'orientation est conçu pour prendre sans contact une relation dans l'espace donnée à l'avance par rapport à la surface (103) de l'objet (104).

4. Installation suivant la revendication 1 ou la revendication 2,
comprenant un dispositif (108) de support,
qui rend possible au moins de mettre le capteur (101) d'orientation dans la relation connue par rapport à la position (102) à identifier à la surface (103) de l'objet (104).

5. Installation suivant l'une des revendications précédentes, dans laquelle le capteur (101) d'orientation et le dispositif (105) programmable sont logés dans un boîtier (109) commun.

6. Installation suivant la revendication 5,
dans laquelle le capteur (101) d'orientation et le dispositif (105) programmable sont des éléments d'un appareil électronique mobile, de préférence d'un téléphone mobile.

7. Installation suivant la revendication 4,
dans laquelle le dispositif (108) de support comprend le capteur (201) d'orientation.

8. Installation suivant la revendication 7,
dans laquelle le dispositif (108) de support dispose d'une interface (211) de communication,
par laquelle les informations d'angle détectées peuvent être transmises au dispositif (105) programmable.

9. Installation suivant la revendication 8,
dans laquelle l'interface (211) de communication est une interface de communication sans fil.

10. Installation suivant la revendication 1,
dans laquelle la au moins une image numérique est, avec les informations d'angle détectées à l'instant de mesure, mise en mémoire sous la forme de métadonnées dans un fichier commun.

11. Installation suivant l'une des revendications précédentes, dans laquelle la prescription d'association repose sur un modèle tridimensionnel de l'objet (104).

12. Installation suivant la revendication 11,
dans laquelle la prescription d'association est réalisée par une représentation visuelle du modèle tridimensionnel et des informations d'angle détectées.

13. Procédé de localisation, reposant sur un angle, d'une position à la surface d'un objet,
comprenant :
on met (301) un capteur d'orientation, qui est conçu pour détecter au moins à un instant de mesure des informations d'angle par rapport à son orientation en cours, au moins à l'instant de mesure dans une relation connue par rapport à une position à identifier à la surface d'un objet ;
on détecte (302) les informations d'angle à l'instant de mesure ; et
on détermine (303) la position à identifier par association aux informations d'angle détectées à l'aide d'une prescription d'association de l'objet, par laquelle des positions appartenant aux informations d'angle sont associées à la surface de l'objet ;
on enregistre (304) au moins une image numérique en se rapportant à la position à identifier par un capteur à appareil photographique, le capteur à appareil photographique et le capteur d'orientation ayant une position fixe l'un par rapport à l'autre ;
on met (305) en mémoire la au moins une image numérique associée aux informations d'angle détectées à l'instant de mesure ;
à l'enregistrement de la au moins une image numérique par le capteur à appareil photographique, on détecte (307), par le capteur d'orientation, des informations d'angle associées à son orientation en cours ; et
on met (308) en mémoire les informations d'angle, détectées à l'enregistrement de la au moins une image numérique, associées à la au moins une image numérique ; dans lequel le procédé comprend en outre
avant l'enregistrement de la au moins une image numérique par rapport à la position déterminée à la surface de l'objet,
la mise (309) à disposition, pour la comparaison, d'informations d'angle associées à une ou à plusieurs images historiques mises en mémoire pour cette position déterminée,
la mise (309) à disposition comprenant le fait d'indiquer les informations d'angle associées à la une ou au plusieurs images historiques mises en mémoire à un utilisateur par une interface d'utilisateur, en comparaison des informations d'angle par rapport à l'orientation en cours.

14. Procédé suivant la revendication 13,
dans lequel la mise (301) comprend
le fait de mettre le capteur d'orientation au moins à un instant de mesure en contact corporel au moins indirectement avec la surface de l'objet.

15. Procédé suivant la revendication 13,
dans lequel la mise (301) comprend
la mise sans contact du capteur d'orientation de manière à ce que celui-ci prenne une relation spatiale donnée à l'avance par rapport à la surface de l'objet.

16. Produit de programme d'ordinateur à utiliser avec une installation de localisation, reposant sur un angle, d'une position à la surface d'un objet suivant l'une des revendications 1 à 12, dans lequel le produit de programme d'ordinateur comprend des instructions qui, lorsqu'elles sont exécutées par le processeur, font au moins que
l'installation suivant l'une des revendications 1 à 12 effectue les stades du procédé suivant la revendication 13, à l'exception du stade de mise en position du capteur d'orientation.
